# FASCICULE DE BREVET EUROPEEN

(11) **EP 1 495 637 B1**
(45) Date de publication et mention de la délivrance du brevet: **08.05.2013**
(21) Numéro de dépôt: 03704928.5
(22) Date de dépôt: 13.03.2003
(51) Int. Cl.: H04N 21/418, H04N 21/4623, H04N 5/913, H04N 7/16

(54) **METHODE DE STOCKAGE SECURISE DE DONNEES ENCRYPTEES**
VERFAHREN ZUR GESICHERTEN AUFZEICHNUNG VON VERSCHLÜSSELTEN DATEN
SECURE METHOD OF STORING ENCRYPTED DATA ON A PERSONAL DIGITAL RECORDER

(30) Priorité: 15.03.2002 CH 456022002
(43) Date de publication de la demande: 12.01.2005
(73) Titulaire: Nagravision SA, 1033 Cheseaux-sur-Lausanne (CH)
(72) Inventeur: LE BUHAN, Corinne, CH-1619 Les Paccots (CH); BERTHOLET, Patrick, CH-1006 Lausanne (CH); SASSELLI, Marco, CH-1803 Chardonne (CH)
(74) Mandataire: Wenger, Joel-Théophile
(86) Numéro de dépôt international: PCT/IB2003/000916
(87) Numéro de publication internationale: WO 2003/079683

(56) Documents cités:
- EP-A- 0 714 204
- EP-A- 0 936 774
- EP-A1- 0 912 052
- EP-A1- 1 560 361
- EP-A2- 1 353 511
- WO-A2-01/91465
- FR-A- 2 732 537
- US-B1- 6 252 964
- "FUNCTIONAL MODEL OF A CONDITIONAL ACCESS SYSTEM", EBU REVIEW- TECHNICAL, EUROPEAN BROADCASTING UNION. BRUSSELS, BE, no. 266, 21 December 1995 (1995-12-21), pages 64-77, XP000559450, ISSN: 0251-0936

## Description

La présente demande concerne le domaine des récepteurs/décodeurs de services à accès conditionnel, en particulier des récepteurs disposant d'unité de stockage tels que disques durs.

L'évolution technologique dans le domaine des capacités de stockage et de la rapidité des disques magnétiques (disque dur) a fait qu'il est devenu possible de stocker du contenu vidéo télédiffusé pour l'accéder en différé par l'utilisateur.

De tels récepteurs sont connus sous la marque ReplayTV ® ou Tivo ® et proposent des stockages de plusieurs dizaines d'heures de transmission numérique. Ces récepteurs ne sont toutefois pas directement intégrés aux récepteurs/décodeurs de services à accès conditionnel ; en particulier, le contenu est stocké sans protection particulière sur le disque, ce qui rend impossible la collecte des droits d'auteur associés au contenu, dans le cas où le disque serait ensuite dupliqué à des fins de redistribution commerciale.

A l'inverse, dans un système de télévision numérique à péage, le flux numérique transmis vers ces récepteurs est encrypté afin de pouvoir en contrôler l'utilisation et de définir des conditions pour une telle utilisation. Cette encryption est réalisée grâce à des mots de contrôle (Control Words) qui sont changés à intervalle régulier (typiquement entre 5 et 30 secondes) afin de dissuader toute attaque visant à retrouver un tel mot de contrôle.

Pour que le récepteur puisse décrypter le flux encrypté par ces mots de contrôle, ces derniers lui sont envoyés indépendamment du flux dans des messages de contrôle (ECM) encryptés par une clé propre au système de transmission entre le centre de gestion (CAS) et le module de sécurité de l'unité d'utilisateur. En effet, les opérations de sécurité sont effectuées dans une unité de sécurité (SC) qui est généralement sous la forme d'une carte à puce, réputée inviolable. Cette unité peut être soit de type amovible ou directement intégrée au récepteur.

Lors de la décryption d'un message de contrôle (ECM), il est vérifié, dans l'unité de sécurité (SC), que le droit pour accéder au flux considéré est présent. Ce droit peut être géré par des messages d'autorisation (EMM) qui chargent un tel droit dans l'unité de sécurité (SC). D'autres possibilités sont également possibles tels que l'envoi de clés de décryptage.

Pour la suite de l'exposé, on appellera "événement" un contenu vidéo, audio (par exemple MP3) ou données (programme de jeu par exemple) qui est encrypté selon la méthode connue des mots de contrôle, c'est-à-dire avec une clé qui n'est valide que pour une partie du contenu.

La comptabilisation de l'utilisation de tels événements est aujourd'hui basée sur le principe de l'abonnement ou de l'achat unitaire. L'abonnement permet de définir un droit associé à un ou des canaux de diffusion de ces événements et permet à l'utilisateur d'obtenir ces événements en clair si le droit est présent dans son unité de sécurité.

Parallèlement, il est possible de définir des droits propres à un événement, tel qu'un film ou un match de football. L'utilisateur peut acquérir ce droit (achat par exemple) et cet événement sera spécifiquement géré par ce droit. Cette méthode est connue sous l'appellation "pay-per-view" (PPV).

Un message de contrôle (ECM) ne contient pas uniquement le mot de contrôle mais également les conditions pour que ce mot soit renvoyé au récepteur/décodeur. Lors du décryptage des mots de contrôle, il sera vérifié si un droit associé aux conditions d'accès énoncées dans le message est présent dans l'unité de sécurité.

Le mot de contrôle n'est retourné en clair à l'unité d'utilisateur que lorsque la comparaison est positive. Ce mot de contrôle est contenu dans un message de contrôle ECM qui est encrypté par une clé de transmission (TK).

Pour que le droit soit présent dans l'unité de sécurité, il doit être chargé par un message de gestion de droit (EMM) qui pour des raisons de sécurité, est généralement encrypté par une clé différente dite clé de droit (RK).

Selon une forme connue de diffusion de télévision à péage, les trois éléments suivants sont nécessaires pour décrypter un contenu à un moment donné:
- l'événement encrypté par une pluralité de mots de contrôle
- les messages de contrôle ECM
- le droit correspondant stocké dans l'unité de sécurité

Dans la suite de l'exposé, on appellera "clés systèmes" l'ensemble des clés et informations liées à des clés de décryption permettant l'accès au contenu. Dans une configuration connue de télévision à péage, il s'agit des clés de transmission pour décrypter les messages de contrôle (ECM) et des clés de droit pour décrypter les messages de droit (EMM).

Selon un schéma connu, le contenu encrypté qui est stocké sur une unité de stockage telle qu'un disque dur est accompagné au moins des messages de contrôle ECM.

Du fait que le décryptage à posteriori des messages ECM peut poser un problème, en particulier à cause du changement de la clé de transmission, une première solution est proposée dans le document EP 0 912 052, solution qui implique la décryption de ces messages dans l'unité de sécurité et la ré-encryption avant le stockage sur le disque.

Cette solution résout le problème de la durée de vie de la clé de transmission mais charge grandement l'unité de sécurité au moment de l'enregistrement, sans savoir si le contenu enregistré sera un jour utilisé. De plus, une des règles fondamentales du système de sécurité est de ne retourner à l'unité d'utilisateur les mots de contrôle que si les droits existent. Dans ce cas, il se peut fort que ces droits n'existent pas si l'on considère un achat par événement. Le droit sera acquis lors de l'achat qui peut se faire bien plus tard au moment où l'utilisateur décide de visualiser cet événement.

Ce document EP 0 912 052 ne résout pas le problème de l'accès au droit car au moment de l'achat, le message de droit EMM doit être toujours diffusé pour qu'il soit chargé dans l'unité de sécurité.

Ainsi, la solution décrite dans ce document n'est applicable que pour des événements diffusés pour lesquels le droit est déjà présent dans l'unité de sécurité afin d'autoriser la décryption et la ré-encryption des ECM.

Il reste donc un problème non résolu lorsque l'on stocke des événements sans que l'on dispose du droit au moment du stockage ou lorsque les conditions de décryption varient entre le moment du stockage et le moment de l'exploitation de l'événement par l'utilisateur. Un autre aspect est la charge supplémentaire requise par l'unité de sécurité pour cette décryption et ré-encryption.

Le document EP-A-0 936 774 décrit un système pour la transmission et l'enregistrement de données numériques encryptées qui sont diffusées par un centre de diffusion, tout comme le sont des messages de gestion ECM et EMM. Le but visé par l'invention décrite dans ce document est d'empêcher que des données, une fois décryptées, puissent être dupliquées en copies pirates sans toutefois interdire à un utilisateur légitime d'enregistrer un contenu prépayé. Pour ce faire, les données numérique sont brouillées avec au moins un mot de contrôle chiffré par une première clé associée à l'identité des données transmises. Un dispositif d'enregistrement enregistre les données brouillées ainsi que les messages ECM, EMM. Le message ECM comprend le mot de contrôle chiffré alors que le message EMM comprend la première clé chiffrée par une seconde clé stocké dans un module de contrôle d'accès. Grâce à cette seconde clé, ce module est capable de déchiffrer l'EMM pour obtenir la première clé, puis de déchiffrer l'ECM au moyen de cette première clé en vue d'obtenir le mot de contrôle permettant de désembrouiller les données numériques enregistrées. L'inconvénient de ce système réside dans le fait qu'il présente un niveau de sécurité insuffisant.

Le but de la présente invention est de proposer une méthode de stockage d'un événement encrypté par des mots de contrôle (CW) qui garantisse l'accès à cet événement à n'importe quel moment, même si certaines clés du système ont changé pour des raisons de sécurité.

Ce but est atteint par une méthode de stockage d'un événement encrypté par des mots de contrôle (CW) dans une unité de réception et de décryptage connectée à une unité de sécurité (SC), ces mots de contrôle (CW) et les droits nécessaires étant contenus dans des messages de gestion (ECM, EMM) encrypté par des clés systèmes (TK, RK), caractérisée en ce qu'elle consiste à stocker l'événement encrypté ainsi que les messages de contrôle (ECM) sur l'unité de stockage, et à stocker sur l'unité de stockage les clés système encryptées (SK) par une clé locale prédéfinie stockée dans l'unité de sécurité (SC).

Ainsi, l'unité de stockage contient tous les éléments qui permettent à un moment donné de visualiser cet événement tout en garantissant la sécurité qui était celle initialement définie.

Selon l'invention, une clé différente est utilisée pour cette opération de stockage des clés système, ces clés étant nécessaires à la décryption des messages de contrôle et de leur exploitation, différente de celles utilisées dans le cadre usuel du système de réception. Elle est dite prédéfinie car il peut s'agir d'un ensemble de clés qui sont utilisées selon une indication de date par exemple. Ainsi, une clé sera utilisée pour le mois de janvier et une autre pour le mois de février; voire une clé pour les jour paire et une autre pour les jour impair. Cette indication de date est inclus dans le contenu et donc la clé adéquate pourra être utilisée pour décrypter l'ensemble des clés encryptées SK.

Dans les systèmes connus de télévision à péage, les messages de gestion sont composés des messages de contrôle (ECM) et des messages de droit (EMM). La ou les clés de transmission (TK) qui permettent de décrypter les messages de contrôle (ECM) sont changés à intervalle régulier. De plus, selon le type d'implantation choisie, il est possible de changer également la ou les clés de droit (RK) qui sont en charge de décrypter les messages de droit (EMM). Il est précisé ici que selon l'implémentation choisie, il est possible d'utiliser plus qu'une clé pour décrypter un message de transmission (ECM) ou pour décrypter un message de droit (EMM).

Lors de l'encryption des clés systèmes, il est possible de créer non seulement un bloc contenant les clés de transmission et les clés de droit mais deux blocs encryptés par la clé locale, le premier contenant les clés de transmission, et le second contenant les clés de droit.

Ainsi, la solution proposée par la présente invention est d'utiliser une clé particulière (S1) qui ne sera jamais changée et donc garantit que des années plus tard, il sera possible d'accéder à l'événement encrypté.

Dans une forme de réalisation, une clé de session AS est générée aléatoirement et est utilisée pour encrypter les clés systèmes. Avant de transférer les clés systèmes, le module de sécurité encrypte la clé de session par la clé locale S1 et la transfère dans l'unité de stockage. Cette forme de réalisation présente l'avantage de pouvoir utiliser différents algorithmes pour l'encryption des clés systèmes et pour la clé de session, particulièrement en terme de sécurité. L'encryption des clés systèmes sera exécutée par un algorithme symétrique et la clé de session pourra être encryptée par une algorithme symétrique ou asymétrique.

Selon l'invention, du fait que le changement des clés peut survenir pendant ia diffusion du contenu encrypté, il est alors proposé de stocker toutes les clés système actives durant la transmission du contenu, c'est-à-dire les clés en cours d'utilisation et les clés suivantes prêtes pour l'ordre de changement de clés. L'unité de sécurité dispose en permanence de la clé active et de la clé future.

Pour des raisons évidentes de sécurité, la clé locale servant à l'encryption de la clé de transmission doit être conservée dans l'unité de sécurité de chaque récepteur/décodeur et une attention particulière sera portée sur les moyens d'encryption (algorithme, longueur de clé) pour encrypter les clés système.

L'invention sera mieux comprise grâce à la description détaillée qui va suivre et qui se réfère aux dessins annexés qui sont donnés à titre d'exemple nullement limitatif, à savoir:
- la figure 1 illustre un décodeur contenant une unité de stockage,
- la figure 2 illustre les données qui sont stockées sur l'unité de stockage.

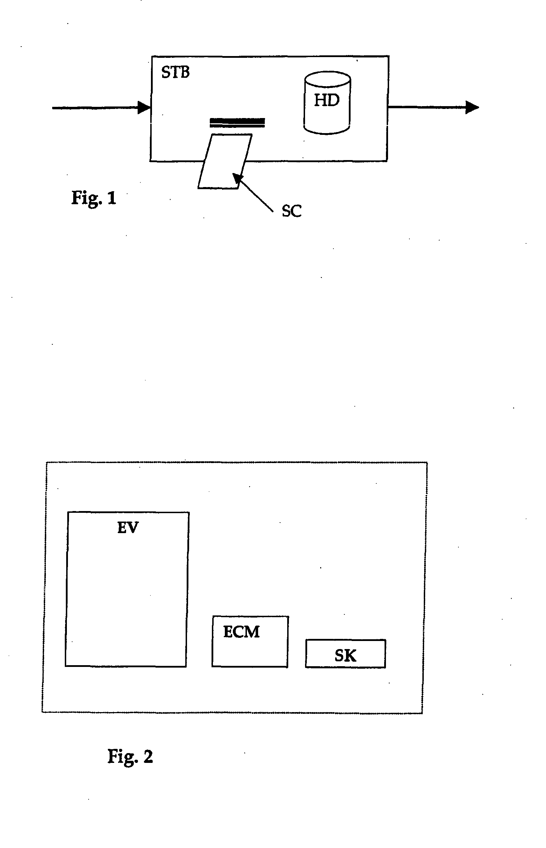

Le décodeur (STB) illustré à la figure 1 reçoit des données en entrée sous forme encryptées. Ces données sont stockées dans l'unité de stockage HD et comprennent notamment l'événement considéré EV, les messages de contrôle ECM et les messages de droit EMM.

Selon l'invention, dans une telle opération de stockage, l'unité de sécurité SC reçoit les messages de contrôle mais ne les renvoie pas à l'unité d'utilisateur. Par contre, cette unité encrypte les clés système par une clé secrète S1 et cet ensemble de clés système encrypté SK est stocké sur l'unité de stockage.

Cette clé secrète S1 peut être une clé propre, à ce décodeur STB, propre à un groupe de décodeurs ou une clé unique pour tous les décodeurs.

Lors de la lecture, un mécanisme particulier est implémenté dans l'unité de sécurité. En effet, il n'est pas possible de remplacer les clés existantes par celles contenues dans l'ensemble SK. Dans un tel cas, le fonctionnement normal du décodeur serait altéré.

Les clés contenues dans l'ensemble formé par les clés systèmes encrypté SK sont stockées dans une région particulière propre à cette opération de lecture d'informations stockées.

L'unité de sécurité doit être capable de dédoubler ses fonctionnalités et d'utiliser une zone de mémoire différente où seront stockées ces clés passées.

Sachant que l'une ou l'autre de ces clés système peut changer, selon une variante de l'invention, cet ensemble de clé SK est généré à intervalle régulier et stocké sur l'unité de stockage HD.

Dans une variante de l'invention, en particulier lorsque l'on souhaite éviter d'encrypter le même contenu (les clés système) avec des clés différentes (la clé secrète S1 de chaque décodeur), ou de rendre accessible l'information du moment de changement de clés, on ajoute une partie aléatoire (padding) aux clés système avant l'encryption. Grâce à cet aléa, même durant une période où les clés ne changent pas, chaque ensemble encrypté SK est différent.

Dans une autre variante de l'invention, en particulier lorsque l'on veut cacher la fréquence de changement des clés système, une information de période de validité, relative au codage de temps du contenu lui-même (par exemple de la minute 15 à la minute 18 de diffusion du contenu), est ajoutée à l'enregistrement de chaque ensemble encrypté SK. Ce dernier est ainsi valable seulement pour la période de validité qui lui est ainsi artificiellement associée, et non plus pour la période de validité de facto des clés système qu'il dissimule.

Pour ce qui concerne la clé secrète S1, plusieurs possibilités sont prévues dans le cadre de cette invention. La caractéristique commune est que cette clé est connue du centre de gestion afin de pouvoir régénérer une unité de sécurité SC qui aurait été perdue ou détruite. En effet, c'est maintenant cette clé qui devient l'élément de base de l'accès aux événements stockés et il est impératif que la destruction d'une unité de sécurité ne rende les données précédemment stockées irrémédiablement inaccessibles.

Dans une variante avec la clé S1 propre à un utilisateur, cette clé peut être générée lors de la personnalisation de l'unité de sécurité et stockée dans le centre de gestion en regard du numéro unique de l'unité.

La description de cette méthode ne se limite pas au domaine de la télévision à péage mais peut s'appliquer également dans le domaine du stockage audio sous forme MP3 par exemple.

Un autre domaine d'application de l'invention concerne le stockage de programmes d'ordinateur ou de jeux.

Selon une autre forme de réalisation de l'invention, le contenu encrypté est décrypté grâce aux mots de contrôle qui sont envoyés depuis l'unité de sécurité vers le décodeur sous forme encryptées. Cette configuration est décrite dans le document WO 99/57901 et garantit que ces mots de contrôle ne pourront servir pour un autre décodeur.

La décryption de ces mots se fait directement dans le circuit intégré qui est en charge de décrypter le contenu, puis de le ré-encrypter par une clé également fournie par l'unité de sécurité. Le contenu est dès lors stocké sur l'unité de stockage du décodeur et est accessible par une seule clé.

Selon cette configuration et dans ce mode de ré-encryption, les données en clair ne sortent pas du circuit intégré spécialisé.

Pour des raisons de sécurité, la clé utilisée pour ré-encrypter le contenu est dite clé de session car elle est générée d'une manière pseudo-aléatoire à chaque fois qu'une telle opération est nécessaire.

Cette clé de session est ensuite encryptée de la même manière que les clés systèmes et stockée dans l'unité de stockage.

Avec cette clé, il est possible d'ajouter les conditions d'accès à ce contenu, conditions qui seront vérifiées lors de la présentation de cette clé de session encryptée à l'unité de sécurité.

## Revendications

1. Méthode d'enregistrement d'un contenu encrypté par des mots de contrôle (CW) dans une unité de stockage d'une unité de réception et de décryptage (STB) connectée à une unité de sécurité (SC), ces mots de contrôle (CW) ainsi que des conditions nécessaires à l'accès de ce contenu étant transmises dans des messages de contrôle (ECM) encryptés chacun par une clé de transmission (TK), des droits acquis pour accéder à ce contenu étant transmis dans des messages de droit (EMM) encryptés chacun par une clé de droit (RK), le contenu encrypté ainsi que les messages de contrôle (ECM) encryptés et les messages de droit (EMM) encryptés étant stockés sur l'unité de stockage, **caractérisée en ce qu'**elle consiste encore à stocker sur l'unité de stockage les clés de transmission (TK) sous forme encryptée par une clé locale prédéfinie (S1) contenue dans l'unité de sécurité (SC) et différente de celles utilisées dans le cadre usuel du système de réception, ainsi que les clés de droit (RK) sous forme encryptée par ladite clé locale prédéfinie (S1).

2. Méthode selon la revendication 1, **caractérisée en ce qu'**une clé de session (AS) est générée aléatoirement et est utilisée pour encrypter les clés de transmission (TK) et de droit (RK), cette clé de session étant encryptée par la clé local (S1) et stockées avec les clés systèmes encryptés.

3. Méthode selon la revendication 1 ou 2, **caractérisée en ce que** la clé locale (S1) est dupliquée dans un centre d'administration afin de pouvoir générer une nouvelle unité de sécurité (SC) en cas de besoin.

4. Méthode selon la revendication 1, **caractérisée en ce que** les clés de transmission (TK) et de droit (RK) sont encryptées par la clé locale (S1) pour former un bloc système encrypté.

5. Méthode selon la revendication 1, **caractérisée en ce que** les clés de transmission (TK) et de droit (RK) sont encryptées par la clé locale (S1) pour former deux blocs système encryptés, l'un contenant la ou les clés de transmission (TK) et l'autre contenant la ou les clés de droit (RK).

## Patentansprüche

1. Speicherverfahren für einen verschlüsselten Inhalt mittels Kontrollwörtern (CW) in einer Speichereinheit einer Empfangs- und Entschlüsselungseinheit (STB), verbunden mit einer Sicherheitseinheit (SC), wobei die Kontrollwörter (CW) sowie notwendige Bedingungen für den Zugang zu diesem Inhalt in Kontrollnachrichten (ECM) übertragen werden, die jeweils durch einen Übertragungsschlüssel (TK) verschlüsselt sind, wobei erworbene Rechte für den Zugang zu diesem Inhalt in Berechtigungsmitteilungen (EMM) übertragen werden, die jeweils durch einen Berechtigungsschlüssel (RK) verschlüsselt sind, wobei der verschlüsselte Inhalt sowie die verschlüsselten Kontrollnachrichten (ECM) und die verschlüsselten Berechtigungsmitteilungen (EMM) in der Speichereinheit gespeichert werden, **dadurch gekennzeichnet, dass** es auch darin besteht, in der Speichereinheit die Übertragungsschlüssel (TK), verschlüsselt durch einen vorherbestimmten lokalen Schlüssel (S1), zu speichern, der in der Sicherheitseinheit (SC) enthalten ist und verschieden von denen, die gewöhnlich im Empfangssystem benutzt werden, sowie die Berechtigungsschlüssel (RK), verschlüsselt durch besagten vorherbestimmten lokalen Schlüssel (S1).

2. Verfahren nach Anspruch 1, **gekennzeichnet dadurch, dass** ein Sitzungsschlüssel (AS) zufällig erzeugt wird und benutzt wird, um die Übertragungsschlüssel (TK) und Berechtigungsschlüssel (RK) zu verschlüsseln, wobei dieser Sitzungsschlüssel vom lokalen Schlüssel (S1) verschlüsselt und mit den Schlüsseln verschlüsselter Systeme gespeichert wird.

3. Verfahren nach Anspruch 1 oder 2, **gekennzeichnet dadurch, dass** der lokale Schlüssel (S1) in einem Verwaltungszentrum dupliziert wird, um bei Bedarf eine neue Sicherheitseinheit (SC) erzeugen zu können.

4. Verfahren nach Anspruch 1, **gekennzeichnet dadurch, dass** die Übertragungsschlüssel (TK) und Berechtigungsschlüssel (RK) vom lokalen Schlüssel (S1) zur Bildung eines verschlüsselten Systemblocks verschlüsselt werden.

5. Verfahren nach Anspruch 1, **gekennzeichnet dadurch dass** die Übertragungsschlüssel (TK) und Berechtigungsschlüssel (RK) vom lokalen Schlüssel (S1) zur Bildung zweier verschlüsselter Systemblöcke verschlüsselt werden, wovon der eine den oder die Übertragungsschlüssel (TK) und der andere den oder die Berechtigungsschlüssel (RK) enthält.

## Claims

1. A recording method of a content encrypted by control words (CW) in a storage device of a receiver/decoder unit (STB) connected to a security unit (SC), said control words (CW) as well as the necessary rights for the access of this content being transmitted in entitlement messages (ECM) encrypted by a system key (TK), the acquired right to access the content being transmitted in rights message encrypted by a right key (RK), the encrypted content as well as the encrypted control message (ECM) and the encrypted right messages (EMM) being stored in the storage device, **characterized in that** it consists in storing the transmission key (TK) in an encrypted form by a predefined local key (S1) contained in the security unit (SC) and different to those used in the frame pf the reception system, as well as the right keys (RK) in encrypted form by said local key (S1).

2. A method according to claim 1, **characterized in that**, a session key (AS) is randomly generated and is used to encrypt the system and right keys (TK, SK), this session key (AS) being encrypted by the local key (S1) and stored with the encrypted system key (SK).

3. A method according to claim 1 or 2, **characterized in that** the local key (S1) is duplicated in a management centre in order to be able to generate a new security unit in case of need.

4. A method according to Claim 1, **characterized in that** the transmission and right keys (TK, RK) are encrypted by the local key (S1) to form a first encrypted system block.

5. A method according to Claim 1, **characterized in that** the transmission and right keys (TK, RK) are encrypted by the local key (S1) to form two encrypted system blocs, one containing the transmission key or keys (TK) and the other one containing the right key of keys (RK).
